(19) Europäisches Patentamt
European Patent Office
Office européen des brevets

(11) Veröffentlichungsnummer: **0 061 609**
**B1**

(12) # EUROPÄISCHE PATENTSCHRIFT

(45) Veröffentlichungstag der Patentschrift: **14.11.84**

(51) Int. Cl.³: **C 08 G 18/32,** C 08 G 18/65, C 08 G 18/10

(21) Anmeldenummer: **82101799.3**

(22) Anmeldetag: **08.03.82**

(54) **Verfahren zur Herstellung von gegebenenfalls zellförmigen Polyurethankunststoffen unter Verwendung von Diolen der Dianhydro-hexit-Reihe.**

(30) Priorität: **20.03.81 DE 3111093**

(43) Veröffentlichungstag der Anmeldung: **06.10.82 Patentblatt 82/40**

(45) Bekanntmachung des Hinweises auf die Patenterteilung: **14.11.84 Patentblatt 84/46**

(84) Benannte Vertragsstaaten: **BE DE FR GB IT**

(56) Entgegenhaltungen:
**DE - A - 2 541 707**
**US - A - 4 098 729**

(73) Patentinhaber: **BAYER AG, Konzernverwaltung RP Patentabteilung, D-5090 Leverkusen 1 Bayerwerk (DE)**

(72) Erfinder: **Meyborg, Holger, Dr., Bergisch-Gladbacher-Strasse 1, D-5068 Odenthal (DE)**
Erfinder: **Wagner, Kuno, Dr., Am Kiesberg 8, D-5090 Leverkusen (DE)**
Erfinder: **Barnes, James Michael, Bechhausen 60, D-5632 Wermelskirchen (DE)**
Erfinder: **Salzburg, Herbert, Dr., Hahnenweg 3, D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 061 609 B1

## Beschreibung

Die Erfindung betrifft ein Verfahren zur Herstellung von gegebenenfalls zellförmigen Polyurethankunststoffen unter Verwendung von Diolen der Dianhydrohexitreihe (Isohexitole) als Kettenverlängerer.

Die Verwendung kurzkettiger Diole als Kettenverlängerer bei der Herstellung von Polyurethankunststoffen ist bekannt. Dabei haben sich bestimmte Kombinationen von Isocyanat und Kettenverlängerer, wie sie etwa im Kunststoffhandbuch, Bd. VII, Vieweg-Höchtlen, Carl-Hanser-Verlag, München (1966) auf den S. 206 ff., beschrieben sind, als besonders geeignet zur Herstellung von Polyurethankunststoffen mit hohem physikalischem Werteniveau erwiesen. Derartige Kombinationen sind unter anderem das System 1,5-Diisocyanatonaphthalin/1,4-Butandiol oder 4,4'-Diisocyanatodiphenylmethan/Hydrochinon- bis -(2-hydroxyethyl)ether. Auch eine Kettenverlängerung mit 2,3-Butandiol gibt in Verbindung mit 1,5-Diisocyanatonaphthalin hochwertige Kunststoffe.

Die hohe Reaktivität der üblichen Kettenverlängerer führt besonders bei Systemen mit hohem Hartsegmentanteil zu sehr kurzen Topfzeiten, so dass eine Verarbeitung zu Formteilen nicht immer ohne Schwierigkeiten möglich ist. Ausserdem kann es durch die grosse Wärmeentwicklung bei einer zu schnellen Reaktion mit dem Kettenverlängerer zur Bildung von Inhomogenitäten und Rissen im fertigen Formteil kommen, die nachteilige Auswirkungen auf die Eigenschaften des Produktes haben.

Es wurde nun gefunden, dass man unter Verwendung bekannter Verfahren Polyurethankunststoffe mit gutem physikalischem Werteniveau und in weiten Bereichen einstellbarer Topfzeit herstellen kann, wenn als Kettenverlängerer 1.4-3.6-Dianhydrohexite eingesetzt werden. Es muss als überraschend bezeichnet werden, dass der vollständige Ersatz nichtzyklischer Kettenverlängerer in für diese optimierten Giesselastomersystemen durch 1.4-3.6-Dianhydrohexite zu Polyurethankunststoffen führt, die in ihrem Werteniveau nicht nur vergleichbar sind, sondern in einigen Parametern wie Weiterreissfestigkeit und Strukturfestigkeit deutlich günstiger zu beurteilen sind. In Anbetracht der völlig anderen Struktur der erfindungsgemässen Kettenverlängerer und der bekannten Empfindlichkeit von Polyurethanelastomeren gegenüber Strukturänderungen im Hartsegment war dieses Ergebnis nicht vorauszusehen.

Weiterhin war nicht zu erwarten, dass man auch dann hochwertige Polyurethankunststoffe erhalten kann, wenn man Abmischungen verschiedener 1.4-3.6-Dianhydrohexite in beliebigen Verhältnissen entweder miteinander oder mit anderen Diolen zur Kettenverlängerung einsetzt. Eine solche Mischverlängerung führt nämlich in der Regel zu Inhomogenitäten im Hartsegment und damit zu einer schlechteren physikalischen Vernetzung des Kunststoffs mit den bekannten Nachteilen für das Werteniveau.

Ein wichtiger verarbeitungstechnischer Vorteil der erwähnten Mischungen ist, dass sie bei bestimmten Mischungsverhältnissen bei Raumtemperatur flüssig sind. Dadurch wird die Applikation des Kettenverlängerers wesentlich erleichtert, ein vorheriges Aufschmelzen entfällt.

Gegenstand der Erfindung ist ein Verfahren zur Herstellung von zellförmigen Polyurethankunststoffen durch Umsetzung von

a) organischen Polyisocyanaten mit
b) mindestens 2 Zerewitinoff-aktive Wasserstoffatome aufweisenden Verbindungen der Molmasse 400 bis 10000,
c) Kettenverlängerungsmitteln, gegebenenfalls weiteren
d) mindestens 2 Zerewitinoff-aktive Wasserstoffatome aufweisenden kurzkettigen Verbindungen der Molmasse 32 bis 400 sowie gegebenenfalls
e) Katalysatoren, Treibmitteln und weiteren an sich bekannten Zusatzstoffen,

dadurch gekennzeichnet, dass als Komponente c 1.4-3-6-Dianhydrohexite, vorzugsweise 1.4-3.6-Dianhydro-D-sorbit der Formel

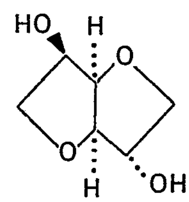

und/oder 1.4-3.6-Dianhydro-D-mannit der Formel

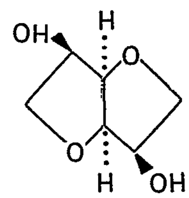

und/oder beliebige Mischungen von Dianhydrosorbit und Dianhydromannit, gegebenenfalls in Abmischung mit niedermolekularen Verbindungen d, vorzugsweise in Abmischung mit Butandiol-1,4, eingesetzt werden.

Für die Durchführung des erfindungsgemässen Verfahrens werden eingesetzt:

a) Als Ausgangskomponenten aliphatische, cycloaliphatische, araliphatische und aromatische Polyisocyanate, wie sie z.B. von W. Siefken in Justus Liebigs „Annalen der Chemie", 562, S. 75 bis 136, beschrieben werden, beispielsweise solche der Formel

$$Q(NCO)_n$$

in der

n 2 bis 4, vorzugsweise 2, und

Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen araliphatischen Kohlenwasserstoffrest mit 8 bis 15, vorzugsweise 8 bis 13 C-Atomen, bedeuten, z.B. 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethylcyclohexan (DE-Auslegeschrift Nr. 1202785, US-Patentschrift Nr. 3401190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, 3,3'-Dimethyl-4,4'-diisocyanatobiphenyl, Naphthylen-1,5-diisocyanat.

Ferner ist es möglich, beliebige Mischungen der vorgenannten Polyisocyanate zu verwenden. Weitere geeignete Polyisocyanate (vorzugsweise Diisocyanate) werden in der DE-OS Nr. 2920501, S. 13/Zeile 13 bis S. 16, beschrieben. Bevorzugte Polyisocyanate sind: Die technisch leicht zugänglichen Polyisocyanate, z.B. das 2,4- und 2,6-Toluylendiisocyanat sowie beliebige Gemische dieser Isomeren (TDI), Polyphenyl/Polymethylen/Polyisocyanate, wie sie durch Anilin/Formaldehyd-Kondensation und anschliessende Phosgenierung hergestellt werden (rohes MDI), 4,4-Diphenylmethandiisocyanat (MDI), 3,3'-Dimethyl-4,4'-diisocyanatobiphenyl und 1,5-Naphthylendiisocyanat. Besonders bevorzugt sind 4,4'-Diphenylmethandiisocyanat und 1,5-Naphthylendiisocyanat.

b) Als Ausgangskomponenten mit mindestens zwei gegenüber Isocyanaten reaktionsfähigen Wasserstoffatomen von einem Molekulargewicht in der Regel von 400 bis 10000 und mindestens zwei Zerewitinoff-aktiven Wasserstoffatomen versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 800 bis 10000, vorzugsweise 1000 bis 6000. Dies sind z.B. mindestens zwei, in der Regel zwei bis acht, vorzugsweise aber zwei bis vier, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind.

Die in Frage kommenden Hydroxylgruppen aufweisenden Polyester sind z.B. Umsetzungsprodukte von mehrwertigen, vorzugsweise zweiwertigen und gegebenenfalls zusätzlich drei- und vierwertigen Alkoholen mit mehrwertigen, vorzugsweise zweiwertigen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Polycarbonsäuren und deren Derivate seien genannt: Adipinsäure, Sebacinsäure, Phthalsäure, Phthalsäureanhydrid, Tetrahydro- oder Hexahydrophthalsäureanhydrid, Isophthalsäure, Trimellitsäure, Maleinsäureanhydrid, di- und trimerisierte ungesättigte Fettsäure, Terephthalsäuredimethylester und Terephthalsäurebisglykolester.

Als mehrwertige Alkohole kommen z.B. Ethylenglykol, Propylenglykol, Butandiol-1,4 und/oder -2,3, Hexandiol-1,6, Neopentylglykol, 1,4-Bishydroxymethylcyclohexan, 2-Methyl-1,3-propandiol, Glycerin, Trimethylolpropan, Hexantriol-1,2,6, Pentaerythrit, Chinit, Mannit und Sorbit, Formit, Methylglykosit, ferner Di-, Tri-, Tetra- und höhere Polyethylen-, Polypropylen- sowie Polybutylenglykole in Frage.

Die Polyester können anteilig endständige Carboxylgruppen aufweisen. Auch Polyester aus Lactonen, z.B. ε-Caprolacton oder Hydroxycarbonsäuren, z.B. ε-Hydroxycapronsäure, sind einsetzbar.

Auch die erfindungsgemäss in Frage kommenden, mindestens 2, in der Regel 2 bis 8, vorzugsweise 2 bis 3 Hydroxylgruppen aufweisenden Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren, oder durch Anlagerung dieser Epoxide, vorzugsweise Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol, Diethylenglykol, Dimethylolpropan, Glycerin, Sorbit, Sucrose, Formit oder Formose, sowie 4,4'-Dihydroxydiphenylpropan, Anilin, Ethylendiamin oder Ethanolamin hergestellt. Auch OH-Gruppen aufweisende Polythioether, Polybutadiene, Polyacetale, Polycarbonate oder Polyesteramide sind einsetzbare Ausgangsprodukte.

Erfindungsgemäss können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) *in situ* in den obengenannten, Hydroxylgruppen aufweisenden Verbindungen ablaufen lässt.

Auch die durch Vinylpolymerisate modifizierten Polyhydroxylverbindungen, wie sie z.B. die Polymerisation von Styrol und/oder Acrylnitril in Gegenwart von Polyethern oder Polycarbonatpolyolen hervorruft, sind für das erfindungsgemässe Verfahren geeignet.

Vertreter der genannten, erfindungsgemäss zu verwendenden höhermolekularen Polyhydroxylverbindungen sind z.B. in „High Polymers", vol. XVI, „Polyurethanes, Chemistry and Technology", verfasst von Saunders-Frisch, Interscience Publishers, New York, London, Bd.I, 1962, S. 32 bis 42 und 44 bis 54 und Bd.II, 1964, S. 5 bis 6 und 198 bis 199, ferner im „Kunststoff-Handbuch", Bd. VII, Vieweg-Höchtlen, Carl-Hanser-Verlag, München (1966), z.B. auf den S. 45 bis 71, sowie besonders in der DE-OS Nr. 2920501, S. 17 bis 24 aufgeführt. Selbstverständlich können Mischungen der obengenannten Verbindungen, z.B. Mischungen von Polyethern und Polyestern, eingesetzt werden.

Auch bereits Urethan- oder Harnstoffgruppen enthaltende Polyhydroxylverbindungen sowie gegebenenfalls modifizierte natürliche Polyole, wie Rizinusöl oder Kohlenhydrate, z.B. Stärke, sind verwendbar. Auch Anlagerungsprodukte von Alkylenoxiden an Phenolformaldehydharze oder auch an Harnstofformaldehydharze sind erfindungsgemäss einsetzbar.

Erfindungsgemäss werden als Kettenverlängerungsmittel c Verbindungen aus der Reihe der 1.4-3.6-Dianhydrohexite der allgemeinen Formel (I)

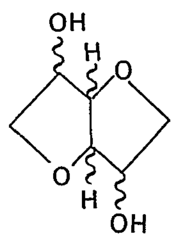
(I)

eingesetzt.

Bevorzugt werden 1.4-3.6-Dianhydro-D-sorbit (Formel II) und 1.4-3.6-Dianhydro-D-mannit (Formel III).

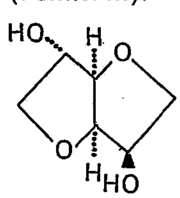
(II)

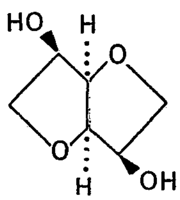
(III)

Die erfindungsgemässen Kettenverlängerer können selbstverständlich auch in Form von Abmischungen in beliebigen Mischungsverhältnissen miteinander verwendet werden. Andererseits werden erfindungsgemäss auch Mischungen der Bisanhydrohexite mit anderen, 2 bis 8, vorzugsweise 2 bis 4, gegenüber Isocyanaten reaktionsfähige Wasserstoffatome enthaltenden kurzkettigen Verbindungen der Molmasse 32 bis 400 (Kettenverlängerer d) verwendet.

Als Beispiele für derartige Hydroxylgruppen und/oder Aminogruppen und/oder Thiolgruppen und/oder Carboxylgruppen, vorzugsweise Hydroxylgruppen und/oder Aminogruppen enthaltende Kettenverlängerer d, seien genannt: niedermolekulare Polyole und/oder Aminoalkohole vom Molekulargewicht 62 bis 400, wie Ethylenglykol, Propylenglykol-(1,2) und-(1,3), Butylenglykol-(1,4) und -(2,3), Pentandiol-(1,5), Hexandiol-(1,6), Octandiol-(1,8), Neopentylglykol, 1,4-Bishydroxymethylcyclohexan, 2-Methyl-1,3-propandiol, Dibrombutendiol (US-Patentschrift Nr. 3723392), Glyzerin, Trimethylolpropan, Hexantriol-(1,2,6), Trimethylolethan, Pentaerythrit, Chinit, Mannit und Sorbit, Ricinusöl, Diethylenglykol, Triethylenglykol, Tetraethylenglykol, höhere Polyethylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxydiphenylpropan, Dihydroxyethylhydrochinon, Ethanolamin, Diethanolamin, N-Methyldiethanolamin, Triethanolamin und 3-Aminopropanol.

Als niedermolekulare Polyole kommen erfindungsgemäss auch die Gemische von Hydroxyaldehyden und Hydroxyketonen (Formose) bzw. die mehrwertigen Alkohole (Formit) in Frage. Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften Nrn. 2738513 und 2738532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäss als Polyolkomponente in Betracht (DE-Offenlegungsschrift Nr. 2638759).

Erfindungsgemäss geeignete aliphatische Diamine sind beispielsweise Ethylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan (Isophorondiamin), 2,4- und 2,6-Hexahydrotoluylendiamin sowie deren Gemische, Perhydro-2,4'- und -4,4'diaminodiphenylmethan, p-Xylylendiamin, Bis-(3-aminopropyl)-methylamin, Diaminoperhydroanthazene und cycloaliphatische Triamine gemäss DE-Offenlegungsschrift Nr. 2614244. Auch Hydrazin und substituierte Hydrazine sowie Säuredihydrazide kommen erfindungsgemäss in Betracht, z.B. Carbodihydrazid, Oxalsäuredihydrazid, die Dihydrazide von Malonsäure, Bernsteinsäure, Glutarsäure, Adipinsäure, Hydracrylsäure und Terephthalsäure; Semicarbazidoalkylenhydrazide, Semicarbazidoalkylencarbazinester oder auch Aminosemicarbazidverbindungen. Zur Steuerung ihrer Reaktivität können die Aminogruppen ganz oder teilweise durch $CO_2$ in Form ihrer Carbonate oder durch Aldimin- bzw. Ketimingruppen blockiert sein.

Als Beispiele für aromatische Diamine seien Bisanthranilsäureester gemäss den DE-Offenlegungsschriften Nrn. 2040644 und 2160590, 3,5- und 2,4-Diaminobenzoesäureester gemäss DE-Offenlegungsschrift Nr. 2025900, estergruppenhaltige Diamine, Ethergruppen aufweisende Diamine, gegebenenfalls in 5-Stellung substituierte 2-Halogen-1,3-phenylendiamine, 3,3'-Dichlor-4,4'-diaminodiphenylmethan, Toluylendiamine, 4,4'-Diaminodiphenylmethan, 4,4'-Diaminodiphenylsulfid, Diaminodiphenyldithioether, durch Alkylthiogruppen substituierte aromatische Diamine, Diaminobenzolphosphonsäureester, Sulfonat- oder Carboxylatgruppen enthaltende aromatische Diamine sowie die in der DE-Offenlegungsschrift Nr. 2635400 aufgeführten hochschmelzenden Diamine genannt. Beispiele für aliphatisch-aromatische Diamine sind Aminoalkylthioaniline.

Weiterhin können erfindungsgemäss auch Verbindungen wie 1-Mercapto-3-aminopropan, gegebenenfalls substituierte Aminosäuren, z.B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Als weitere erfindungsgemäss geeignete niedermolekulare Polyole vom Molekulargewicht bis 400 sind Esterdiole wie z.B. ε-Hydroxybutyl-ε-hydroxycapronsäureester, ω-Hydroxyhexyl-γ-hydroxybuttersäureester, Adipinsäurebis-(β-hydroxyethyl)ester und Terephthalsäurebis-(β-hydroxyethyl)ester; Diolurethane, z.B. 1,6-Hexamethylenbis-(β-hydroxyethylurethan) oder 4,4'-Diphenylmethanbis-(ε-hydroxybutylurethan); sowie Diolharnstoffe, z.B. 4,4'-Diphenylmethanbis-(β-hydroxyethylharnstoff), genannt.

Derartige geeignete Kettenverlängerungsmittel d sind in der DE-OS Nr. 2854384 auf der S. 20/Zeile 1 bis S. 26/Zeile 5 ausführlich beschrieben.

Für manche Zwecke ist es vorteilhaft, Polyole einzusetzen, welche Sulfonat- und/oder Phosphonatgruppen enthalten (DE-Offenlegungsschrift Nr. 2719372), vorzugsweise das Addukt von Bisulfit an Butandiol-1,4 bzw. dessen Alkoxylierungsprodukte.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z.B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Ethylhexanol, Octanol, Dodecanol, die verschiedenen Amylalkohole, Cyclohexanol, Ethylenglykolmonoethylether oder Diisopropylcerbinol.

Bevorzugt sind jedoch Abmischungen der 1.4-3.6-Dianhydrohexite mit niedermolekularen Diaminen, besonders aber Diolen, wie sie unter d aufgeführt wurden. Unter den niedermolekularen Diolen ist 1.4-Butandiol besonders bevorzugt.

Wenn die Funktionalität der Ausgangsisocyanate und/oder Hydroxyl- bzw. -aminkomponenten >2 ist, erhält man Polyurethankunststoffe, die nicht mehr thermoplastisch sind, man stellt hieraus vorzugsweise zellförmige Polyurethane, wie Schaumstoffe, her.

Obwohl die Verwendung der 1.4-3.6-Dianhydrohexite und ihrer Abmischungen den Vorteil einer längeren Topfzeit bietet, kann es vorteilhaft sein, gegebenenfalls weitere Hilfs- und Zusatzmittel einzusetzen. Dazu gehören:

a) Katalysatoren für die Reaktion zwischen Hydroxyl- und Isocyanatgruppen, vorzugsweise solche der in der Polyurethanchemie an sich bekannten Art, z.B. tertiäre Amine, wie Triethylamin, N-Tetramethylethylendiamin, 1,4-Diazabicyclo-(2,2,2)-octan, N,N-Dimethylbenzylamin, N-Methyl-N'-dimethylaminoethylpiperazin, Pentamethyldiethylentriamin, oder auch als Katalysatoren bekannte Mannichbasen aus sekundären Aminen, wie Dimethylamin und Aldehyden (Formaldehyd) oder Ketonen (Aceton) und Phenolen, ferner Silaamine mit Kohlenstoff/Silicium-Bindungen, z.B. 2,2,4-Trimethyl-2-silamorpholin und 1,3-Diethylaminomethyltetramethyldisiloxan. Erfindungsgemäss können auch organische Metallverbindungen, insbesondere organische Zinnverbindungen, als Katalysatoren verwendet werden, z.B. Zinn(II)acetat, Zinn(II)ethylhexoat und die Zinn(IV)verbindungen, z.B. Dibutylzinndichlorid, Dibutylzinndilaurat, Dibutylzinnmaleat. Weitere geeignete Katalysatoren sind in der DE-OS Nr. 2920501 auf den S. 29/Zeile 5 bis S. 31/Zeile 25 beschrieben.

Die Katalysatoren werden vorzugsweise in einer Menge zwischen 0,001 und 10 Gew.-%, bezogen auf das Gesamtgewicht von b, c, d, eingesetzt. Selbstverständlich können alle Katalysatoren als Gemische eingesetzt werden. Besonders geeignete Katalysatoren sind Zinn(II)carbonsäuresalze, Triethylendiamin und Titansäureester.

b) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Trischlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Russ oder Schlämmkreide.

Sollen nach dem erfindungsgemässen Verfahren zellförmige Polyurethankunststoffe hergestellt werden, dann werden Wasser und/oder leicht flüchtige organische Substanzen als Treibmittel mitverwendet.

Als organische Treibmittel kommen z.B. Aceton, Ethylacetat, halogensubstituierte Alkane wie Methylenchlorid, Chloroform, Ethylidenchlorid, Vinylidenchlorid, Monofluortrichlormethan, Chloridfluormethan, Dichlordifluormethan, ferner Butan, Hexan, Heptan oder Diethylether in Frage. Eine Treibwirkung kann auch durch Zusatz von bei Temperaturen über Raumtemperatur unter Abspaltung von Gasen, beispielsweise von Stickstoff, sich zersetzenden Verbindungen erzielt werden.

Weitere Beispiele für Treibmittel sowie Einzelheiten über die Verwendung von Treibmitteln sind im „Kunststoff-Handbuch," Bd. VII, herausgegeben von Vieweg und Höchtlen, Carl-Hanser-Verlag, München (1966), z.B. auf den S. 108 und 109, 453 bis 455 und 507 bis 510 und in der DE-OS Nr. 2920501 beschrieben.

Erfindungsgemäss können auch oberflächenaktive Zusatzstoffe, wie Emulgatoren und Schaumstabilisatoren, mitverwendet werden. Als Emulgatoren kommen z.B. die Natriumsalze von Ricinusölsufonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, in Frage.

Diese Verbindungen sind im allgemeinen so aufgebaut, dass ein Copolymerisat aus Ethylenoxid und Propylenoxid mit einem Polydimethylsiloxanrest verbunden ist. Derartige Schaumstabilisatoren sind z.B. in den amerikanischen Patentschriften Nrn. 2834748, 2917480 und 3629308 beschrieben.

Beispiele von gegebenenfalls erfindungsgemäss mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im „Kunststoff-Handbuch“, Bd. VII, herausgegeben von Vieweg und Höchtlen, Carl-Hanser-Verlag, München (1966), z.B. auf der S. 103 bis 113, sowie in der DE-OS Nr. 2920501 beschrieben.

Das erfindungsgemässe Verfahren wird im allgemeinen wie folgt durchgeführt:

Die Reaktionskomponenten werden erfindungsgemäss nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der amerikanischen Patentschrift Nr. 2764565 beschrieben werden. Einzelheiten über Verarbeitungseinrichtungen, die auch erfindungsgemäss in Frage kommen, werden im „Kunststoff-Handbuch“, Bd. VII, herausgegeben von Vieweg und Höchtlen, Carl-Hanser-Verlag, München (1966), z.B. auf den S. 121 bis 247 beschrieben.

Die Mengen an Reaktionskomponenten werden im erfindungsgemässen Verfahren in der Regel so gewählt, dass das Molverhältnis von Polyisocyanaten zu Kettenverlängerer plus Verbindungen mit reaktionsfähigen OH-Gruppen – abhängig vom jeweils angewendeten Verarbeitungsverfahren – in der Regel zwischen 0,9 und 1,5 liegt, vorzugsweise zwischen 1,05 und 1,25. Der Prozentgehalt an NCO im Prepolymer, falls über die Prepolymerstufe gearbeitet wird, kann 1 bis 8, vorzugsweise 2 bis 6 Gew.-% betragen. Das Molverhältnis von reaktionsfähigem Wasserstoff des Kettenverlängerers zu reaktionsfähigen OH-Gruppen kann in weiten Grenzen variieren, vorzugsweise soll es zwischen 0,4 und 1,5 liegen, wobei weiche bis harte Polyurethantypen resultieren.

Eine weitere Ausführungsform besteht darin, dass man die höhermolekulare Verbindung mit mindestens 2 Hydroxylgruppen im Gemisch mit dem Kettenverlängerungsmittel in einem Überschuss an Diisocyanat umsetzt und das Reaktionsprodukt nach der Granulierung in der Hitze unter Druck verformt. Je nach den angewendeten Mengenverhältnissen der Reaktionsteilnehmer können hierbei Polyurethankunststoffe mit verschiedenartigen Härten und verschiedenartiger Elastizität erhalten werden. Man kann auf diese Weise auch Kunststoffe herstellen, die sich wie Thermoplaste verarbeiten lassen. Eine weitere Ausführungsform besteht darin, dass man die höhermolekulare Verbindung mit mindestens 2 Hydroxylgruppen im Gemisch mit dem erfindungsgemäss zu verwendenden Kettenverlängerungsmittel mit einem Unterschuss an Diisocyanat umsetzt, wobei ein walzbares Fell erhalten wird, das anschliessend, z.B. durch Vernetzung mit weiterem Diisocyanat, in einen kautschukelastischen Polyurethankunststoff übergeführt werden kann.

Erfindungsgemäss hergestellte Elastomere finden vielseitige Anwendung, z.B. für mechanisch stark beanspruchte Formkörper, wie Rollen, Keilriemen oder Dichtungen, die thermisch oder chemisch stark beansprucht werden, für Heisswasserrohre oder Motoren oder zur Herstellung von Folien, Textilbeschichtungen und Polyurethanpulvern. Neben homogenen Elastomeren können auch zellförmige Polyurethane(weiche bis harte Schaumstoffe) hergestellt werden.

Die folgenden Beispiele erläutern das erfindungsgemässe Verfahren. Wo nicht anders vermerkt, sind Zahlenwerte als Gewichtsteile bzw. Gewichtsprozente zu verstehen.

*Beispiel 1:*

250 Teile eines aus Adipinsäure und Ethylenglykol bestehenden Polyesters mit einem mittleren Molekulargewicht von 2000 und einer OH-Zahl von 56 werden bei 120°C und einem Vakuum von 14 mbar entwässert.

Dann gibt man 44,63 Teile 1.5-Diisocyanatonaphthalin zu und hält die Temperatur 30 min bei 130°C. Zu dem Prepolymer wird nun unter starkem Rühren bei 110°C ein vorher aufgeschmolzenes Gemisch aus 8,05 Teilen 1.4-3.6-Dianhydro-D-sorbit und 0,036 Teilen Zinn(II)-octoat gegeben. Es wird 30 s gerührt und dann in eine auf 110°C vorgeheizte Form gegossen. Die Mischung ist 5 min giessfähig. Es wird noch 24 h bei 110°C getempert. Das fertige Elastomer hat folgende Eigenschaften: σ100: 3,41 MPa; Zugfestigkeit: 32,9 MPa; Reissdehnung: 664%; Strukturfestigkeit: 498 N; Shore-Härte (A): 75; Elastizität: 40.

*Beispiel 2:*

Analog Beispiel 1 werden 250 Teile eines Polyesters aus Adipinsäure und Ethylenglykol mit einem mittleren Molekulargewicht von 2000 und einer OH-Zahl von 56 entwässert und mit 52,2 Teilen Diisocyanatonaphthalin prepolymerisiert. Bei 100°C rührt man ein vorher aufgeschmolzenes Gemisch aus 9,83 Teilen 1.4-3.6-Dianhydro-D-sorbit und 0,018 Teilen Zinnoctoat ein. Nach 30 s wird in eine auf 110°C vorgeheizte Form gegossen. Die Mischung ist 6 min giessfähig. Nach 24stündigem Tempern bei 110°C erhält man ein Elastomer mit folgenden Eigenschaften: σ100: 5,23 MPa; Zugfestigkeit: 32,5 MPa; Reissdehnung: 603%; Strukturfestigkeit: 507 N; Shore (A): 86; Elastizität: 43.

*Beispiel 3:*

Man stellt das gleiche Prepolymer wie in Beispiel 2 her. Dieses Prepolymer wird analog Beispiel 2 mit einem Gemisch aus 12,69 Teilen 1.4-3.6-Dianhydro-D-sorbit und 0,018 Teilen Zinnoctoat umgesetzt und in eine Form gegossen. Die Mischung ist 6 min giessfähig. Man tempert noch 24 h bei 110°C. Die Eigenschaften des Elastomeren sind wie folgt: σ100: 4,37 MPa; Zugfestigkeit: 31,8 MPa; Reissdehnung: 564%; Strukturfestigkeit: 535 N; Shore (A): 85; Elastizität: 40.

*Beispiel 4:*

Die Herstellung des Prepolymeren sowie die weitere Arbeitsweise ist mit Beispiel 3 identisch. Zur Kettenverlängerung wird ein Gemisch aus 2,54 Teilen 1.4-3.6-Dianhydro-D-sorbit und 6,26 Teilen 1.4-Butandiol mit 0,018 Teilen Zinnoctoat verwendet. Die Mischung ist 4 min giessfähig. Das Elastomer hat nach dem Ausheizen folgendes Werteniveau: σ100: 4,52 MPa; Zugfestigkeit: 30,2 MPa; Reissdehnung: 599%; Strukturfestigkeit: 513 N; Shore (A): 85; Elastizität: 47.

*Beispiel 5:*

250 Teile eines Polyesters aus Adipinsäure und Ethylenglykol mit einem mittleren Molgewicht von 2000 und einer OH-Zahl von 56 werden bei 130°C und einem Druck von 14 mbar entwässert. Dann gibt man 44,36 Teile 1,5-Diisocyanatonaphthalin zu und hält die Temperatur über 30 min bei 130°C. Man lässt auf 110°C abkühlen und rührt eine vorher aufgeschmolzene Mischung aus 4,83 Teilen 1.4-3.6-Dianhydro-D-sorbit, 3,22 Teilen 1.4-3.6-Dianhydro-D-mannit und 0,036 Teilen Zinnoctoat ein. Nach 30 s wird in eine auf 110°C vorgeheizte Form vergossen. Die Mischung ist 4 min giessfähig. Es wird 24 h bei 110°C getempert. Man erhält ein Elastomer mit folgendem Eigenschaftsbild: σ100: 2,42 MPa; Zugfestigkeit: 28,4 MPa; Reissdehnung: 625%; Strukturfestigkeit: 630 N; Shore (A): 72; Elastizität: 49.

*Beispiel 6:*

Man stellt das gleiche Prepolymer wie in Beispiel 5 her. Bei 110°C rührt man eine aufgeschmolzene Mischung aus 8,05 Teilen 1.4-3.6-Dianhydro-D-mannit und 0,018 Teilen Zinnoctoat ein. Nach 30 s wird in eine auf 110°C vorgeheizte Form gegossen. Die Mischung ist 2 min giessfähig. Man tempert 24 h bei 110°C und erhält ein Elastomer mit folgenden Werten: σ100: 3,24 MPa; Zugfestigkeit: 26,8 MPa; Reissdehnung: 632%; Strukturfestigkeit: 740 N; Shore (A): 77; Elastizität: 43.

*Beispiel 7:*

200 Teile eines Mischpolyesters aus Adipinsäure, Ethylenglykol und 1.4-Butandiol mit einem mittleren Molgewicht von 2000 und einer OH-Zahl von 56 werden 30 min bei 11 mm und 130°C entwässert. Dann gibt man 80 Teile 1.5-Diisocyanatonaphthalin zu. Man hält 30 min bei 130°C und kühlt dann auf 110°C. Es wird eine vorher aufgeschmolzene Mischung aus 34 Teilen 1.4-3.6-Dianhydro-D-sorbit und 0,067 Teilen Triethylendiamin (Dabco®) eingerührt. Nach 30 s wird vergossen. Die Mischung ist 2 min giessfähig. Das 24 h lang bei 110°C getemperte Produkt hat folgendes Werteprofil: σ100: 12 MPa; Zugfestigkeit: 22,7 MPa; Reissdehnung: 312%; Strukturfestigkeit: 633 N; Shore (A): 95; Elastizität: 39.

*Beispiel 8:*

Man stellt das gleiche Prepolymer wie in Beispiel 7 her. Dieses Prepolymer wird analog Beispiel 7 mit einer aufgeschmolzenen Mischung aus 20,4 Teilen 1.4-3.6-Dianhydro-D-sorbit, 13,6 Teilen 1.4-3.6-Dianhydro-D-mannit und 0,067 Teilen Dabco zur Umsetzung gebracht und vergossen. Die Mischung ist 3 min giessfähig. Man tempert 24 h bei 110°C und erhählt ein Elastomer mit folgenden Eigenschaften: σ100: 12,2 MPa; Zugfestigkeit: 21,0 MPa; Reissdehnung: 252%; Strukturfestigkeit: 643 N; Shore (A): 97; Elastizität: 38.

*Beispiel 9:*

Es wird das Prepolymer von Beispiel 7 hergestellt. Dieses Prepolymer wird analog Beispiel 7 mit einer aufgeschmolzenen Mischung aus 34 Teilen 1.4-3.6-Dianhydro-D-mannit und 0,67 Teilen Dabco umgesetzt und vergossen. Die Mischung ist 2 min giessfähig. Das fertige Elastomer weist folgende Kenndaten auf: σ100: 12,6 MPa; Zugfestigkeit: 22,7 MPa; Reissdehnung: 346%; Strukturfestigkeit: 653 N; Shore (A): 95; Elastizität: 44.

*Beispiel 10:*

Man stellt eine Mischung aus 50,9 Teilen 1.4-3.6-Dianhydro-D-sorbit, 40,9 Teilen 1.4-3.6-Dianhydro-D-mannit und 9,1 Teilen 1.4-Butandiol her. Diese Mischung ist flüssig. Bei 10maligem Einfrieren auf −20°C und Aufwärmen auf Raumtemperatur kann keine Kristallisation einer der Komponenten beobachtet werden. Bei einer Dichte von 1,3 $g \cdot cm^{-3}$ wird eine Viskosität von 1011 cPo (22°C) gemessen.

*Beispiel 11:*

Zu 32,18 Teilen der in Beispiel 10 hergestellten Mischung werden 0,67 Teile Dabco gegeben. Dieses Gemisch wird wie in Beispiel 7 mit dem Prepolymer aus Beispiel 7 umgesetzt. Die Mischung ist 6 min giessfähig. Das fertige Elastomer

hat folgende Kenndaten: σ100: 11,1 MPa; Zugfestigkeit: 21,5 MPa; Reissdehnung: 311%; Strukturfestigkeit: 587 N; Shore (A): 93; Elastizität: 36.

*Beispiel 12:*

250 Teile eines auf Propylenglykol gestarteten und mit Propylenoxid hergestellten Polyethers mit einem mittleren Molekulargewicht von 2000 und einer OH-Zahl von 56 werden bei 130°C und 14 mbar entwässert. Bei 130°C gibt man 93,75 Teile 4,4'-Diisocyanatodiphenylmethan zu und rührt 30 min. Dann wird auf 100°C abgekühlt und ein aufgeschmolzenes Gemisch aus 31,52 Teilen 1.4-3.6-Dianhydro-D-sorbit und 0,054 Teilen Zinnoctoat eingerührt. Nach 30 s wird in eine auf 110°C vorgeheizte Form vergossen. Die Mischung ist 12 min giessfähig. Man tempert 24 h bei 110°C und erhält ein Elastomeres mit folgenden Werten: σ100: 4,38 MPa; Zugfestigkeit: 8,40 MPa; Reissdehnung: 315% Strukturfestigkeit: 199 N; Shore (A): 82; Elastizität: 44.

Als mögliche maximale Giesszeit ist in den Beispielen 1 bis 12 der Zeitraum angegeben, in dem das Gemisch so dünnflüssig ist, dass es beim Eintauchen und anschliessendem Herausziehen eines dünnen Holzstabes Fäden zieht.

Die folgenden Beispiele illustrieren den Einfluss verschiedener Katalysatoren auf die Topfzeit.

*Beispiel 13:*

100 Teile eines Polyesters aus Ethylenglykol und Adipinsäure mit einem mittleren Molgewicht von 2000 und einer OH-Zahl von 56 werden bei 140°C mit einem Teil Trimethylolpropan vermischt. Dann gibt man 40 Teile 1.5-Diisocyanatonaphthalin zu und rührt 2 min. Nun werden 16,2 Teile Dianhydrosorbit ohne Katalysator in Form einer Schmelze in das Prepolymer eingerührt. Das reagierende Gemisch bleibt 20 min so niedrigviskos, dass es giessfähig ist und erstarrt nach etwa 60 min. Ein so hergestelltes Elastomer hat nach dem Tempern bei 110°C folgende Kenndaten: σ100: 11,3 MPa; Bruchspannung: 41 MPa; Bruchdehnung: 481%; Shore (A): 96; Elastizität: 34.

*Beispiel 14:*

100 Teile eines Mischpolyesters aus Ethylenglykol, 1.4-Butandiol und Adipinsäure mit einem mittleren Molgewicht von 2000 und einer OH-Zahl von 56 werden analog Beispiel 13 mit 40 Teilen 1.5-Diisocyanatonaphthalin und 17 Teilen Dianhydrosorbit ohne Katalysatorzusatz umgesetzt. Es resultiert eine effektive Giesszeit von 9 min und eine Abbindezeit von 2,5 h. Das so hergestellte Elastomer hat nach dem Tempern folgendes Werteniveau: σ100: 10,2 MPa; Bruchspannung: 20 MPa; Bruchdehnung: 506%; Shore (A): 96; Elastizität: 36.

*Beispiel 15:*

Man verwendet die Rezeptur von Beispiel 14 unter Zusatz von 0,026 Teilen Dabco zum Dianhydrosorbit. Die effektive Giesszeit beträgt dann 3 min, die Abbindezeit 6 min. Nach dem Tempern hat das Elastomer folgende Eigenschaften: σ100: 11,9 MPa; Bruchspannung: 43 MPa; Bruchdehnung: 480%; Shore (A): 95; Elastizität: 36.

*Beispiel 16:*

Man verwendet die Rezeptur von Beispiel 14 unter Zusatz von 0,005 Teilen Dibutylzinndilaurat zum Dianhydrosorbit. Dadurch resultiert eine effektive Giesszeit von 12 min und eine Abbindezeit von 35 min. Das mechanische Werteniveau ist nach dem Tempern wie folgt: σ100: 11,4 MPa; Bruchspannung: 35 MPa; Bruchdehnung: 494% Shore (A): 96; Elastizität: 37.

*Beispiel 17:*

Durch Verzehnfachung der Katalysatormenge in Beispiel 16 erhält man eine Giesszeit von 2 min und eine Abbindezeit von 4 min. Das Elastomere hat folgende Eigenschaften: σ100: 11,0 MPa; Bruchspannung: 26 MPa; Bruchdehnung: 485% Shore (A): 96; Elastizität: 35.

*Beispiel 18:*

Man verwendet die Rezeptur von Beispiel 14 unter Zusatz von 0,004 Teilen Titantetrabutylat zum Dianhydrosorbit. Dadurch stellt sich eine Giesszeit von 6 min und eine Abbindezeit von 20 min ein. Das Elastomere hat folgendes Werteprofil: σ100: 11,2 MPa; Bruchspannung: 34 MPa; Bruchdehnung: 504%; Shore (A): 97; Elastizität: 36.

*Beispiel 19:*

Durch Verdreifachung der Katalysatormenge in Beispiel 18 erhält man eine Giesszeit von 2,5 min und eine Abbindezeit von 5 min. Es resultiert folgendes Eigenschaftsbild: σ100: 11,3 MPa; Bruchspannung: 24 MPa; Bruchdehnung: 460%; Shore (A): Elastizität: 36.

*Beispiel 20:*

Das Prepolymer aus Beispiel 14 wird mit 17 Teilen 1.4-3.6-Dianhydromannit ohne Katalysator umgesetzt. Es resultiert eine effektive Giesszeit von 17 min und eine Abbindezeit von 240 min. Die Daten des Elastomeren sind: σ100: 11,4 MPa; Bruchspannung: 25 MPa; Bruchdehnung: 385%; Elastizität: 40.

*Beispiel 21:*

Katalysiert man die Rezeptur aus Beispiel 20 mit 0,026 Teilen Dabco, so erhält man eine Giesszeit von 1 min und eine Abbindezeit von 4 min sowie folgendes Werteprofil: σ100: 11,2 MPa; Bruchspannung: 28 MPa; Bruchdehnung: 526%; Elastizität: 41.

In den Beispielen 1 bis 12 wurden die angegebenen Prüfwerte am Ring nach DIN 53504 ermittelt, die Werte der Beispiele 13 bis 21 sind nach DIN 53504 am Stab bestimmt worden. In allen Beispielen wurden Härte und Elastizität nach DIN 53505 bzw. 53512 gemessen.

*Beispiel 22:*

*Herstellung eines zelligen Polyurethankunststoffs*

90 Teile eines Mischpolyesters aus Ethylenglykol, 1.4-Butandiol und Adipinsäure mit einem mittleren Molgewicht von 2000 und einer OH-Zahl von 56 werden mit 1,5 Teilen Rizinusöl und 0,005 Teilen Zitronensäure vermischt und auf 132°C erhitzt. Dann gibt man 24 Teile 1.5-Diisocyanatonaphthalin zu und rührt 15 min bei 110-130°C. Man kühlt auf 90°C ab und versetzt das Prepolymer zuerst mit 1,5 Teilen (2,6-2',6'-Tetraisopropyl)diphenylcarbodiimid und dann mit einem Gemisch aus 1,075 Teilen Wasser, 1,075 Teilen eines Fettsäuresulfonats als Emulgator und 0,7 Teilen 1.4-3.6-Dianhydro-D-sorbit. Man lässt in einer geschlossenen Form ausreagieren und erhält einen zelligen Polyurethankunststoff, der durch folgende Daten charakterisiert ist: Steigzeit: 90 s; Abbindezeit: 180 s; Rohdichte: 605 kg/m$^3$; Stosselastizität: 61% (DIN 53512).

Druckverformungsrest: bei Raumtemperatur 5% (DIN 53517), bei 70°C 9%.

## Patentansprüche

1. Verfahren zur Herstellung von gegebenenfalls zellförmigen Polyurethankunststoffen durch Umsetzungen von
   a) organischen Polyisocyanaten mit
   b) mindestens 2 Zerewitinoff-aktive Wasserstoffatome aufweisenden Verbindungen der Molmasse 400 bis 10000,
   c) Kettenverlängerungsmitteln, gegebenenfalls weiteren
   d) mindestens 2 Zerewitinoff-aktive Wasserstoffatome aufweisenden kurzkettigen Verbindungen der Molmasse 32 bis 400, sowie gegebenenfalls
   e) Katalysatoren, Treibmitteln und weiteren an sich bekannten Zusatzstoffen,

dadurch gekennzeichnet, dass als Komponente c 1.4-3.6-Dianhydrohexite eingesetzt werden.

2. Verfahren nach Anspruch 1, dadurch gekennzeichnet, dass als Bisanhydrohexite
   a) 1.4-3.6-Dianhydro-D-sorbit der Formel

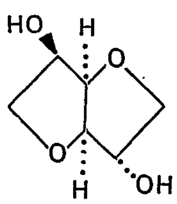

und/oder
   b) 1.4-3.6-Dianhydro-D-mannit der Formel

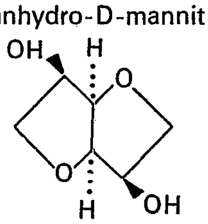

eingesetzt werden.

3. Verfahren nach den Ansprüchen 1 und 2, dadurch gekennzeichnet, dass beliebige Mischungen von Dianhydrosorbit und Dianhydromannit eingesetzt werden.

4. Verfahren nach den Ansprüchen 1 bis 3, dadurch gekennzeichnet, dass beliebige Mischungen von Dianhydrohexiten mit niedermolekularen Polyolen vom Molekulargewicht 62 bis 400 eingesetzt werden.

5. Verfahren nach den Ansprüchen 1 bis 4, dadurch gekennzeichnet, dass beliebige Mischungen von Dianhydrosorbit und 1.4-Butandiol eingesetzt werden.

6. Verfahren nach den Ansprüchen 1 bis 4, dadurch gekennzeichnet, dass beliebige Mischungen von Dianhydromannit und 1.4-Butandiol eingesetzt werden.

7. Verfahren nach den Ansprüchen 1 bis 4, dadurch gekennzeichnet, dass ternäre Mischungen aus 1.4-3.6-Dianhydro-D-sorbit, 1.4-3.6-Dianhydro-D-mannit und 1.4-Butandiol eingesetzt werden.

## Claims

1. Process for the preparation of optionally cellular polyurethane plastics by reacting
   a) organic polyisocyanates with
   b) compounds containing at least 2 Zerewitinoff-active hydrogen atoms and having a molar mass of 400 to 10,000,
   c) chain-extending agents, optionally additional
   d) short-chain compounds containing at least 2 Zerewitinoff-active hydrogen atoms and having a molar mass of 32 to 400, as well as optionally
   e) catalysts, blowing agents and other additives known *per se*,

characterised in that 1,4-3,6-dianhydro-hexitols are used as component c.

2. Process according to Claim 1, characterised in that
   a) 1,4-3,6-dianhydro-D-sorbitol of the formula

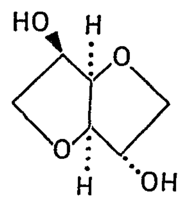

and/or
   b) 1,4-3,6-dianhydro-D-mannitol of the formula

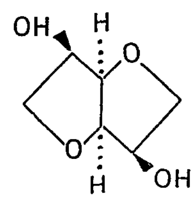

are used as the bisanhydrohexitols.

3. Process according to Claims 1 and 2,

characterised in that any desired mixtures of dianhydrosorbitol and dianhydromannitol are used.

4. Process according to Claims 1 to 3, characterised in that any desired mixtures of dianhydrohexitols with low-molecular polyols having a molecular weight of 62 to 400 are used.

5. Process according to Claims 1 to 4, characterised in that any desired mixtures of dianhydrosorbitol and 1,4-butanediol are used.

6. Process according to Claims 1 to 4, characterised in that any desired mixtures of dianhydromannitol and 1,4-butanediol are used.

7. Process according to Claims 1 to 4, characterised in that ternary mixtures of 1,4-3,6-dianhydro-D-sorbitol, 1,4-3,6-dianhydro-D-mannitol and 1,4-butanediol are used.

## Revendications

1. Procédé de préparation de résines synthétiques de polyuréthannes éventuellement alvéolaires par réaction
   a) des polyisocyanates organiques avec
   b) des composés de masse moléculaire 400 à 10000, portant au moins deux atomes d'hydrogène actif selon Zerewitinoff,
   c) des agents d'allongement des chaînes,
   d) éventuellement d'autres composés à chaîne courte, de masse moléculaire 32 à 400, portant au moins deux atomes d'hydrogène actif selon Zerewitinoff, et éventuellement
   e) des catalyseurs, des agents gonflants et d'autres additifs connus en soi,

le procédé se caractérisant en ce que l'on utilise en tant que composants c des 1,4-3,6-dianhydrohexitols.

2. Procédé selon la revendication 1, caractérisé en ce que l'on utilise en tant que bisanhydrohexitols

a) le 1,4-3,6-dianhydro-D-sorbitol de formule

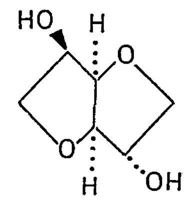

et/ou

b) le 1,4-3,6-dianhydro-D-mannitol de formule

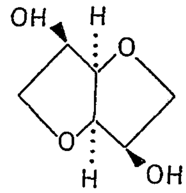

3. Procédé selon les revendications 1 et 2, caractérisé en ce que l'on utilise des mélanges quelconques de dianhydrosorbitol et de dianhydromannitol.

4. Procédé selon les revendications 1 à 3, caractérisé en ce que l'on utilise des mélanges quelconques de dianhydrohexitols et de polyols à bas poids moléculaire, de poids moléculaire 62 à 400.

5. Procédé selon les revendications 1 à 4, caractérisé en ce que l'on utilise des mélanges quelconques de dianhydrosorbitol et de 1,4-butanediol.

6. Procédé selon les revendications 1 à 4, caractérisé en ce que l'on utilise des mélanges quelconques de dianhydromannitol et de 1,4-butanediol.

7. Procédé selon les revendications 1 à 4, caractérisé en ce que l'on utilise des mélanges ternaires de 1,4-3,6-dianhydro-D-sorbitol, de 1,4-3,6-dianhydro-D-mannitol et de 1,4-butanediol.